# EUROPEAN PATENT SPECIFICATION

(11) **EP 1 819 851 B1**
(45) Date of publication and mention of the grant of the patent: **29.07.2015**
(21) Application number: 05814935.2
(22) Date of filing: 07.12.2005
(51) Int. Cl.: D01F 2/06, D01F 2/10, D01D 5/253, B68G 1/00

(54) **FILLING MATERIAL AND USE OF CELLULOSIC STAPLE FIBERS AS FILLING FIBRE**
FÜLLMATERIAL, SOWIE VERWENDUNG CELLULOSISCHER STAPELFASERN ALS FÜLLFASER
MATERIAU DE REMPLISSAGE ET UTILISATION DE FIBRES CELLULOSIQUES COURTES COMME FIBRE DE REMPLISSAGE

(30) Priority: 10.12.2004 AT 20832004; 17.02.2005 AT 2562005
(43) Date of publication of application: 22.08.2007
(73) Proprietor: LENZING AKTIENGESELLSCHAFT, 4860 Lenzing (AT)
(72) Inventor: KRONER, Gert, A-4860 Lenzing (AT); FIRGO, Heinrich, A-4840 Vöcklabruck (AT); MÄNNER, Johann, A-4852 Weyregg (AT); SULEK, Peter, A-4840 Vöcklabruck (AT)
(74) Representative: Nemec, Harald
(86) International application number: PCT/AT2005/000493
(87) International publication number: WO 2006/060835

(56) References cited:
- EP-A- 0 301 874
- WO-A-2004/005595
- WO-A-2004/007818
- WO-A-2004/023943
- GB-A- 2 085 304
- US-A- 4 076 933
- US-A- 4 388 260
- "BISFA Terminology of man-made fibres", * page 9 * * page 17 *

## Description

The present invention relates to the field of filling materials for textile objects such as duvets, cushions, pillows, mattresses, fleeces for upholstery, clothing and the like, and to materials which are especially useful therefor.

It is known that filling materials for textile objects must meet special requirements.
Especially, high bulk with a low density at the same time, and suitable properties with regard to heat insulation, moisture adsorption and moisture transport are desired.

WO 99/16705 proposes a filling material consisting of a non-woven mixture of polyester fibers and Lyocell fibers. Lyocell fibers are cellulosic fibers which are spun from a solution of cellulose in an aqueous tertiary amine oxide, especially N-methyl-N-morpholine-N-oxide (NMMO).

EP 1 067 227 A1 discloses a mixed fiber fleece of polyester fibers and viscose fibers as a filling material.

The known filling materials, be it that they consist of one single fiber type or of fiber mixtures, or of mixtures of fibers with other materials, e.g. down, are still not fully satisfactory with regard to their properties.

It is an object of the present invention to provide a filling material which excellently fulfils the requirements that are to be met by such materials.

This object is achieved according to one aspect by the use of a plurality of multilobal cellulosic staple fibers, wherein the cross-section of the fibers is substantially the same throughout the plurality of the fibers, as a filling fiber.

A further aspect of the present invention relates to a filling material containing multilobal cellulosic staple fibers the cross-section of which is substantially the same throughout the plurality of the fibers.

Preferred embodiments of the present invention are disclosed in the dependent claims.

The present invention is based on the discovery that a plurality of multilobal cellulosic staple fibers the cross-section of which is substantially the same throughout the plurality of the fibers, is excellently suitable as a filling fiber for various textile uses, especially for duvets, cushions, pillows, mattresses, fleeces for upholstery, and clothing.

By "multilobal" cellulosic staple fibers, fibers are to be understood the cross-section of which exhibits three or more lobes. Such fibers can be produced by spinning a cellulose spinning solution through spinnerets, the openings of which exhibit three or more lobes having a ratio between length and width of the lobes of preferably 2:1 or more, respectively. The fibers thus produced exhibit a cross-section which, throughout the plurality of fibers, is substantially the same.

A process for the production of multilobal cellulosic staple fibers is described, for example, in EP-A 0 301 874. However, this document solely discloses the use of such fibers for absorbent products, such as e.g. tampons.

A further process for the manufacture of cellulosic staple fibers by spinning a spinning solution through a spinneret with multi-lobed openings is disclosed in WO 04/85720.

JP-A 61-113812 as well as Treiber E., Chemiefasern 5 (1967), 344-348 ("Verzug, Verstreckung und Querschnittsmodifizierung beim Viskosespinnen") disclose the manufacture of cellulosic (endless) filaments by spinning a spinning solution through a spinneret with multi-lobed openings. The properties of (endless) filaments are pronouncedly different from those of staple fibers, especially with regard to the crimping properties.

It can be shown that multilobal cellulosic staple fibers as defined in claim 1 possess a spectrum of properties which renders them particularly useful as a filling material. Especially, fibers of this kind exhibit a high flexural stiffness, high bulk, high rebound capacity and a high water absorption capacity.

Preferably the titer of the multilobal cellulosic staple fiber used according to the present invention is 1.0 to 30 dtex, preferably more than 3.0 dtex, especially more than 5.0 dtex, preferably 5.6 to 10 dtex, especially preferred more than 6.0 dtex, especially 6.3 to 10 dtex.

The suitable range of titers in each case depends on the envisaged use of the filling material. When used as as filling fiber for clothing, rather a lower decitex in the range of 1 dtex to 5 dtex, preferably about 3 dtex to 4 dtex, is advantageous. A typical titer for textile applications is in the range of about 3.3 dtex.

In the field of filling material for duvets, cushions, and the like, a titer in the range of from more than 5.0 dtex to 10 dtex is preferred. Here, a typical titer lies in the range of about 6.7 dtex.

Particularly useful as a filling fiber is a cellulosic staple fiber, which is characterized in that
- the cross-section of the fiber has three or more lobes
- the titer of the fiber is 1.0 to 30 dtex, preferably more than 3.0 dtex, especially more than 5.0 dtex, preferably 5.6 to 10 dtex, especially preferred more than 6.0 dtex, especially 6.3 to 10 dtex
- the fiber is a Modal fiber, wherein
- the wet modulus of the fiber fulfils the following formula:
   Wet modulus (cN) ≥ 0,5*√T wherein T is the titer of the fiber in dtex
- the breaking strength of the fiber in the conditioned state fulfils the following formula:
   Breaking Strength (cN) ≥ 1.3*√T + 2*T wherein T is the titer of the fiber in dtex.

A fiber having this combination of features has not yet been disclosed in the state of the art.

This multilobal cellulosic staple fiber is a so-called "Modal" fiber. In the following, this preferred embodiment is referred to as "multilobal Modal fiber". The term "Modal fiber" is a generic name by which according to the definition of BISFA (Bureau for the International Standardization of Man-Made-Fibers) a cellulosic fiber with a high wet tenacity and a high wet modulus (i.e. the force which is required to elongate the fiber in the wet condition by 5%) is to be understood.

The multilobal Modal fiber possesses a spectrum of properties which excellently fulfils the requirements which are to be met by a filling fiber. Especially the higher flexural stiffness as compared with common Modal fibers is to be mentioned. For example, a common Modal fiber with a titer of 6.5 dtex exhibits a flexural stiffness of 0.35 mN mm²/tex², whereas a multilobal Modal fiber exhibits, with the same titer, a flexural stiffness of 0.44 mN mm²/tex².

The flexural stiffness is measured by a method developed by the applicant. The measured value is displayed as the relation of the gradient of the force to path over a linear measuring range, based on the titer.

In order to carry out the measurement, a conditioned fiber is clamped into a clamping bar and cut with a cutting device to a length of exactly 5 mm. The clamping bar is moved upwardly at constant speed by an electric gear. Thereby, the fiber is pressed onto a small sensor plate which is adapted to a force sensor. The stiffer the fiber, the higher is the measured force.

Due to the lack of possibilities to calibrate, no effective force is given for the calculation of the flexural stiffness. However, it is possible to make a relative comparison of fibers in a specified measuring range. Thereby, the gradient is measured in a linear measuring range of the measured force over the path and related to the titer of the fiber.

In the multilobal Modal fiber, the numeric relation between area F of the fiber cross-section and the perimeter U of the fiber cross-section is preferably from 1.7:1 to 3.5:1. In this embodiment, the lobes of the fiber cross-section are comparatively thicker and shorter. The numeric relation between the area of the cross-section of the fiber and the perimeter of the fiber can be determined by software-based calculation from a micro-photograph of the fiber cross-section.

In a further preferred embodiment, the area of the fiber cross-section of the multilobal Modal fiber is larger by a factor of 2.30-fold or more, preferably 2.50-fold or more, especially preferred 2.70-fold and more, than the area of the largest equilateral triangle which is inscribed into said cross-section. This resembles a more distinct development of the form of the lobes of the fiber. The ratio between the area of the fiber cross-section and the area of the largest equilateral triangle that can be inscribed, is determined by the method which is described in detail in WO 04/85720. This ratio is, in the following, referred to as the "Delta-factor".

It can be shown that the multilobal Modal staple fibers exhibit a very high water absorption capacity.

Preferably, the multilobal Modal fiber exhibits a Syngina absorption capacity of more than 6.0 g/g, preferably 6.5 g/g or more, especially preferred 6.8 g/g and more.

The Syngina absorption capacity is calculated according to the test method disclosed in WO 04/85720.

If the absorption capacity is determined according to the EDANA test method ERT 350.0-02, values of 4.5 g/g and more are achieved.

For the use of the multilobal Modal fiber as a filling fiber it is, furthermore, advantageous, if the fiber exhibits on its surface a substance increasing the slippage, especially silicone. Such substances can be applied in a manner known per se during the fiber production in the baths of the after-treatment and finishing steps. An amount of the substance increasing the slippage, especially of silicone, from 0.3 weight% to 3.0 weight%, based on the weight of the fiber, is advantageous.

A process for the production of Modal fibers not having a lobal cross-section is known e.g. from AT 287.905 B. If, when carrying out such a process, a spinneret with multilobal, preferably trilobal openings is used, the multilobal Modal fibers can be produced. Preferably, spinnerets with openings the lobes of which have a ratio of length to width of lower than 3:1 are used.

The filling material which can be obtained by using a multilobal cellulosic staple fiber, especially the multilobal Modal fiber, may be present in the form of a fleece, a fiberball, a wadding, or in other forms known to the skilled artisan.

In a preferred embodiment, the filling material according to the invention essentially consists of the multilobal cellulosic staple fiber.

For many applications, however, the use of several components, i.e. the multilobal cellulosic staple fiber on the one hand, and further materials, such as e.g. further fibers and/or further filling components on the other hand is suitable as a filling material.

The fiber which can be used as the further component may preferably be selected from the group consisting of synthetic fibers, especially polyester fibers, polyacrylic fibers, polyamide fibers, polylactate fibers; natural fibers, especially cotton, kapok, bast fibers, sisal, silk; man-made cellulosic fibers, especially viscose fibers, Modal fibers, Lyocell fibers; and/or animal hair, especially sheep wool, horsehair, rabbit wool, camel hair and cashmere.

As a further component, not being in fiber form, a material of the group consisting of down and feathers may be selected.

Polyester fibers and/or down are especially preferred as the further components for the filling material according to the invention.

If several components are used, the multilobal cellulosic staple fiber is preferably present in an amount of from 20 weight% to 90 weight%, based on the whole filling material.

If several components are used as a filling material, the skilled artisan is aware of various assemblies:
First, the components may be present mixed with another as a so-called "intimate mixture".

Furthermore, assemblies are known which are composed of various fleece-like layers. The multilobal cellulosic staple fiber (as a pure material or, again, mixed with another component) is used in at least one of these fleece-like layers.

In the filling material according to the invention, the multilobal cellulosic staple fiber may also be used in a modified form, e.g. inherently flame-retardant by incorporation of a flame-retardant agent (such as Exolit® 5060 by Messrs. Clariant), aftertreatment with a flame-retardant agent or otherwise modified in a flame-retardant fashion. In this regard, it is advantageous to form so-called cellulose/clay nanocomposites wherein the clay component of said nanocomposite comprises a material selected from the group consisting of unmodified clays and modified clays, such as hydrophobically or hydrophilically modified clays. The clay component may preferably comprise a montmorillonite or a modified or unmodified hectorite clay.

The multilobal cellulosic staple fiber may, furthermore, be modified by a compound selected from the group consisting of chitosan and chitosonium polymers. Especially, it is advantageous to modify the fiber by coating the fiber with chitosan. The use of chitosonium polymers to modify Lyocell fibers is known from WO 2004/007818.

Multilobal cellulosic staple fibers modified with chitosan or a chitosonium polymer exhibit the known properties of chitosan, i.e. antimicrobial activity, positive influence on wound healing, odour repressive properties and antiallergenic properties, rendering these fibers especially useful as a filling material.

In the following, the invention is described in more detail by way of the working examples and the figures.

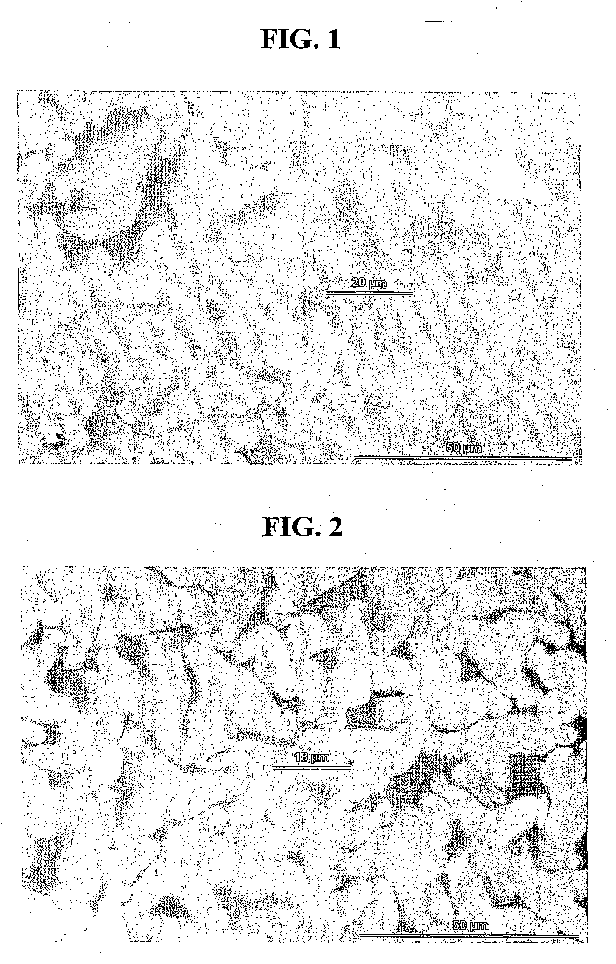

Thereby, figures 1 and 2 show fiber cross-sections of multilobal Modal fibers, which have been produced according to example 1 and example 3, respectively.

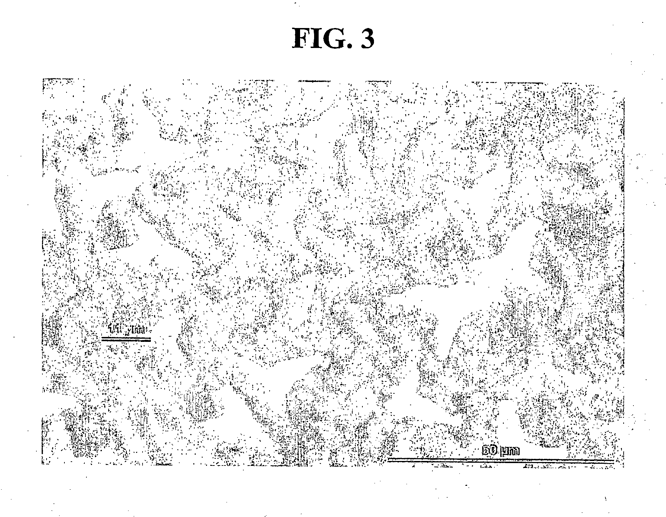

Figure 3 shows fiber cross-sections of multilobal Modal fibers which have been produced according to example 4.

### Examples

### Example 1:

Viscose pulp with an R18-content of 93% was alkalized with mashing lye containing 240 g/l sodium hydroxide under stirring at 35°C. Addition of the pulp and discharging of the slurry were performed continuously via a pump. The slurry was pressed off to a fleece of alkalized cellulose containing 33% cellulose and 17% sodium hydroxide.

The fleece of alkalized cellulose was shredded. The alkalized cellulose was ripened at a temperature of 30°C, so that the copper viscosity of the cellulose was 16 mPa.s before sulfidizing. By addition of 38% CS₂, based on cellulose, sulfidation was performed in a sulfidation plant at 28°C for two hours while circulating the mass. The xanthogenate was dissolved with a dilute sodium hydroxide solution to a viscose with 6.1% cellulose, 6.5% NaOH and 36% CS₂, based on cellulose.

The viscose was filtered three times and de-aerated. 1 hour before spinning 3.0%, based on cellulose, of a modifying agent (ethoxylated amines) effecting a mantle structure were added to the viscose. The viscose was ripened to a spinning gamma value of 57. Viscosity during spinning was 80 ball-fall seconds. The viscose was spun on a commercial spinning device through spinnerets with 625 trilobal holes, each having 3 lobes of 72 x 33µm (ratio of length to width: 2.18), into a spinning bath having the following composition:
70 g/l sulfuric acid
90 g/l sodium sulfate
55 g/l zinc sulfate

Temperature of the spin bath was 40°C. The coagulated and partly regenerated filament strand, which had a pale yellowish colour, was led over a first godet (G1) into a second bath, the temperature of which was 95°C, and was stretched there between G1 and a second godet (G2) by 75%. The final draw-off speed was 20 m/min.

The spinning tow was cut to staples with a length of 60 mm, which then were fully regenerated in diluted sulfuric acid, thereafter washed with hot water until they were acid-free, desulfurized with dilute sodium lye, again washed, bleached with dilute sodium hypochlorite solution, again washed, finished with a silicone emulsion, pressed off and dried.

The fibers, having a titer of 6.8 dtex, had the following properties:

| | |
|---|---|
| Fiber tenacity (conditioned state): | 29 cN/tex |
| Fiber tenacity (wet state): | 17 cN/tex |
| Elongation (conditioned): | 16% |
| Elongation (wet): | 18% |
| Wet modulus: | 3.75 cN/tex/5% |
| Syngina-Value (test method according to WO 04/85720): | 7.0 g/g |
| Water retention capacity: | 62% |
| Ratio of area of fiber cross-section to fiber cross-section perimeter: | 2.1:1 |
| Delta-factor: | 2.6 |

Figure 1 shows fiber cross-sections of the fibers spun according to example 1.

### Example 2:

An eucalyptus pulp with an R18-content of 97.5% was alkalized with mashing lye containing 220 g/l sodium hydroxide under stirring at 50°C. Further treatment of the slurry and sulfidation were performed in the same manner as described in example 1. The xanthogenate was dissolved with a dilute sodium hydroxide solution to a viscose with 6.3% cellulose, 6.2% NaOH and 36% CS₂, based on cellulose.

Further treatment of the viscose was performed in the same manner as described in example 1. The viscose was spun on a commercial spinning device through spinnerets with 625 trilobal holes, each having 3 lobes of 72 x 33µm (ratio of length to width: 2.18) into a spinning bath having the following composition:
72 g/l sulfuric acid
90 g/l sodium sulfate
53 g/l zinc sulfate

Temperature of the spin bath was 42°C. Further treatment of the spun filaments was performed in the same manner as described in example 1.

The fibers, having a titer of 7.6 dtex, had the following properties:

| | |
|---|---|
| Fiber tenacity (conditioned state): | 30 cN/tex |
| Fiber tenacity (wet state): | 19 cN/tex |
| Elongation (conditioned): | 17% |
| Elongation (wet): | 20% |
| Wet modulus: | 3.5 cN/tex/5% |
| Syngina-Value (test method according to WO 04/85720): | 6.8 g/g |
| Water retention capacity: | 61% |
| Ratio of area of fiber cross-section to fiber cross-section perimeter: | 1.9:1 |
| Delta-factor: | 2.55 |

### Example 3:

A hardwood pulp with an R18-content of 94% was alkalized with mashing lye containing 220 g/l sodium hydroxide under stirring at 45°C. Further treatment of the slurry and sulfidation were performed in the same manner as described in example 1. The xanthogenate was dissolved with a dilute sodium hydroxide solution to a viscose with 5.9% cellulose, 6.1% NaOH and 36% CS₂, based on cellulose.

Further treatment of the viscose was performed in the same manner as described in example 1. The viscose was spun on a commercial spinning device through spinnerets with 625 trilobal holes, each having 3 lobes of 70 x 30 µm (ratio of length to width: 2.33) into a spinning bath having the following composition:
68 g/l sulfuric acid
95 g/l sodium sulfate
55 g/l zinc sulfate

Temperature of the spin bath was 37°C. Further treatment of the spun filaments was performed in the same manner as described in example 1.

The fibers, having a titer of 6.1 dtex, had the following properties:

| | |
|---|---|
| Fiber tenacity (conditioned state): | 30 cN/tex |
| Fiber tenacity (wet state): | 19 cN/tex |
| Elongation (conditioned): | 18% |
| Elongation (wet): | 20% |
| Wet modulus: | 4.1 cN/tex/5% |
| Syngina-Value (test method according to WO 04/85720): | 6.85 g/g |
| Water retention capacity: | 62% |
| Ratio of area of fiber cross-section to fiber cross-section perimeter: | 2.5:1 |
| Delta-factor: | 2.8 |

Figure 2 shows fiber cross-sections of the fibers spun according to example 3.

### Example 4:

An eucalyptus pulp with an R18-content of 97.5% was alkalized with mashing lye containing 220 g/l sodium hydroxide under stirring at 50°C. Further treatment of the slurry and sulfidation were performed in the same manner as described in example 1. The xanthogenate was dissolved with a dilute sodium hydroxide solution to a viscose with 6.1% cellulose, 6.2% NaOH and 36% CS₂, based on cellulose.

Further treatment of the viscose was performed in the same manner as described in example 1. The viscose was spun on a commercial spinning device through spinnerets with 625 trilobal holes, each having 3 lobes of 70 x 30 µm (ratio of length to width: 2.33) into a spinning bath having the following composition:
72 g/l sulfuric acid
95 g/l sodium sulfate
53 g/l zinc sulfate

Temperature of the spin bath was 42°C. Further treatment of the spun filaments was performed in the same manner as described in example 1.

The fibers, having a titer of 3.3 dtex, had the following properties:

| | |
|---|---|
| Fiber tenacity (conditioned state): | 27 cN/tex |
| Fiber tenacity (wet state): | 18 cN/tex |
| Elongation (conditioned): | 10% |
| Elongation (wet): | 12% |
| Wet modulus: | 6.5 cN/tex/5% |
| Syngina-Value (test method according to WO 04/85720): | 6.3 g/g |
| Water retention capacity: | 74% |
| Ratio of area of fiber cross-section to fiber cross-section perimeter: | 2.6:1 |
| Delta-factor: | 2.6 |

Figure 3 shows fiber cross-sections of the fibers spun according to example 4.

### Example 5

Using a trilobal Modal staple fiber produced according to example 1, fleeces were produced which were used as a filling material for duvets.

Thereby,
a) a fleece of 100% of the fiber produced according to example 1
b) a fleece of 70% of the fiber produced according to example 1 and 30% polyester fiber
c) a fleece of 50% of the fiber produced according to example 1 and 50% polyester fiber
were produced.

In all cases the fleeces had excellent evenness.

## Claims

1. Use of a plurality of multilobal cellulosic staple fibers, wherein the cross-section of the fibers is substantially the same throughout the plurality of the fibers, as a filling fiber.

2. Use according to claim 1 as a filling fiber for duvets, cushions, pillows, mattresses, fleeces for upholstery and clothing.

3. Use according to claim 1 or 2, **characterized in that** the titer of the multilobal cellulosic staple fiber is 1.0 to 30 dtex, preferably more than 3.0 dtex, especially more than 5.0 dtex, preferably 5.6 to 10 dtex, especially preferred more than 6.0 dtex, especially 6.3 to 10 dtex.

4. Use according to any of claims 1 to 3, **characterized in that** the cellulosic staple fiber is modified by a compound selected from the group consisting of chitosan and chitosonium polymers.

5. Use according to any of claims 1 to 4, **characterized in that** the cellulosic staple fiber is modified by a flame-retardant agent, preferably a modified or unmodified clay.

6. Use according to any of claims 1 to 5, **characterized in that** a cellulosic staple fiber is used, which has the following properties:
- the cross-section of the fibers has three or more lobes, respectively
- the cross-section of the fibers is substantially the same throughout the plurality of the fibers
- the titer of the fibers is 1.0 to 30 dtex, preferably more than 3.0 dtex, especially more than 5.0 dtex, preferably 5.6 to 10 dtex, especially preferred more than 6.0 dtex, especially 6.3 to 10 dtex
- the fibers are Modal fibers, wherein
- the wet modulus of the fibers fulfils the following formula:
Wet modulus (cN) ≥ 0,5*√T wherein T is the titer of the fiber in dtex
- the breaking strength of the fibers in the conditioned state fulfils the following formula:
Breaking Strength (cN) ≥ 1.3*√T + 2*T wherein T is the titer of the fiber in dtex.

7. Filling material for duvets, cushions, pillows, mattresses, fleeces for upholstery, clothing, containing multilobal cellulosic staple fibers the cross-section of which is substantially the same throughout the plurality of the fibers.

8. Filling material according to claim 7, **characterized in that** the titer of the multilobal cellulosic staple fiber is 1.0 to 30 dtex, preferably more than 3.0 dtex, especially more than 5.0 dtex, preferably 5.6 to 10 dtex, especially preferred more than 6.0 dtex, especially 6.3 to 10 dtex.

9. Filling material according to claim 7 or 8, **characterized in that** the multilobal cellulosic staple fiber is modified by a compound selected from the group consisting of chitosan and chitosonium polymers.

10. Filling material according to any of claims 7 to 9, **characterized in that** the multilobal cellulosic staple fiber is modified by a flame-retardant agent, preferably a modified or unmodified clay.

11. Filling material according to any of claims 7 to 10, **characterized in that** a cellulosic staple fiber is used, which has the following properties:
- the cross-section of the fibers has three or more lobes, respectively
- the cross-section of the fibers is substantially the same throughout the plurality of the fibers
- the titer of the fibers is 1.0 to 30 dtex, preferably more than 3.0 dtex, especially more than 5.0 dtex, preferably 5.6 to 10 dtex, especially preferred more than 6.0 dtex, especially 6.3 to 10 dtex
- the fibers are Modal fibers, wherein
- the wet modulus of the fibers fulfils the following formula:
Wet modulus (cN) ≥ 0,5*√T wherein T is the titer of the fiber in dtex
- the breaking strength of the fibers in the conditioned state fulfils the following formula:
Breaking Strength (cN) ≥ 1.3*√T + 2*T wherein T is the titer of the fiber in dtex.

12. Filling material according to any of claims 7 to 11, especially in the form of a fleece, **characterized in that** it consists essentially of the multilobal cellulosic staple fiber.

13. Filling material according to any of claims 7 to 11, **characterized in that** it contains additionally a further fiber and/or a further filling component.

14. Filling material according to claim 13, **characterized in that** the further fiber and/or component is selected from the group consisting of synthetic fibers, especially polyester fibers, polyacrylic fibers, polyamide fibers, polylactate fibers; natural fibers, especially cotton, kapok, bast fibers, sisal, silk; man-made cellulosic fibers, especially viscose fibers, Modal fibers, Lyocell fibers; and/or animal hair, especially sheep wool, horsehair, rabbit wool, camel hair and cashmere.

15. Filling material according to claim 13 or 14, **characterized in that** the further filling component is selected from the group consisting of down and feathers.

16. Filling material according to any of claims 7 to 15 in the form of a fibre ball.

17. Filling material according to any of claims 7 to 15, **characterized in that** it is composed of various fleece layers, wherein at least one of said layers contains the multilobal cellulosic staple fiber.

## Patentansprüche

1. Verwendung einer Vielzahl von multilobalen Cellulosestapelfasern, wobei der Querschnitt der Fasern über die Vielzahl der Fasern im Wesentlichen gleich ist, als Füllfaser.

2. Verwendung gemäß Anspruch 1 als Füllfaser für Decken, Pölster, Kissen, Matratzen, Vliese für Polstermöbel und Bekleidung.

3. Verwendung gemäß Anspruch 1 oder 2, **dadurch gekennzeichnet, dass** der Titer der multilobalen Cellulosestapelfaser 1,0 bis 30 dtex, vorzugsweise mehr als 3,0 dtex, insbesondere mehr als 5,0 dtex, vorzugsweise 5,6 bis 10 dtex, besonders bevorzugt mehr als 6,0 dtex, inbesondere 6,3 bis 10 dtex, beträgt.

4. Verwendung gemäß einem der Ansprüche 1 bis 3, **dadurch gekennzeichnet, dass** die Cellulosestapelfaser durch eine Verbindung, ausgewählt aus der Gruppe bestehend aus Chitosan- und Chitosonium-Polymeren, modifiziert ist.

5. Verwendung gemäß einem der Ansprüche 1 bis 4, **dadurch gekennzeichnet, dass** die Cellulosestapelfaser durch ein flammhemmendes Mittel, vorzugsweise einen modifizierten oder unmodifizierten Ton, modifiziert ist.

6. Verwendung gemäß einem der Ansprüche 1 bis 5, **dadurch gekennzeichnet, dass** eine Cellulosestapelfaser verwendet wird, welche die folgenden Eigenschaften aufweist:
- der Querschnitt der Fasern weist drei oder mehr Schenkel auf,
- der Querschnitt der Fasern ist über die Vielzahl der Fasern im Wesentlichen gleich,
- der Titer der Fasern beträgt 1,0 bis 30 dtex, vorzugsweise mehr als 3,0 dtex, insbesondere mehr als 5,0 dtex, vorzugsweise 5,6 bis 10 dtex, besonders bevorzugt mehr als 6,0 dtex, inbesondere 6,3 bis 10 dtex,
- die Fasern sind Modalfasern, wobei
- der Nassmodul der Fasern folgender Formel genügt:
Nassmodul (cN) ≥ 0,5*√T, wobei T der Titer der Faser in dtex ist,
- die Bruchfestigkeit der Fasern im konditionierten Zustand folgender Formel genügt:
Bruchfestigkeit (cN) ≥ 1,3*√T + 2*T, wobei T der Titer der Faser in dtex ist.

7. Füllmaterial für Decken, Pölster, Kissen, Matratzen, Vliese für Polstermöbel, Bekleidung, enthaltend multilobale Cellulosestapelfasern, deren Querschnitt über die Vielzahl der Fasern im Wesentlichen gleich ist.

8. Füllmaterial gemäß Anspruch 7, **dadurch gekennzeichnet, dass** der Titer der multilobalen Cellulosestapelfaser 1,0 bis 30 dtex, vorzugsweise mehr als 3,0 dtex, insbesondere mehr als 5,0 dtex, vorzugsweise 5,6 bis 10 dtex, besonders bevorzugt mehr als 6,0 dtex, inbesondere 6,3 bis 10 dtex, beträgt.

9. Füllmaterial gemäß Anspruch 7 oder 8, **dadurch gekennzeichnet, dass** die multilobale Cellulosestapelfaser durch eine Verbindung, ausgewählt aus der Gruppe bestehend aus Chitosan- und Chitosonium-Polymeren, modifiziert ist.

10. Füllmaterial gemäß einem der Ansprüche 7 bis 9, **dadurch gekennzeichnet, dass** die multilobale Cellulosestapelfaser durch ein flammhemmendes Mittel, vorzugsweise einen modifizierten oder unmodifizierten Ton, modifiziert ist.

11. Füllmaterial gemäß einem der Ansprüche 7 bis 10, **dadurch gekennzeichnet, dass** eine Cellulosestapelfaser verwendet wird, welche die folgenden Eigenschaften aufweist:
- der Querschnitt der Fasern weist drei oder mehr Schenkel auf,
- der Querschnitt der Fasern ist über die Vielzahl der Fasern im Wesentlichen gleich,
- der Titer der Fasern beträgt 1,0 bis 30 dtex, vorzugsweise mehr als 3,0 dtex, insbesondere mehr als 5,0 dtex, vorzugsweise 5,6 bis 10 dtex, besonders bevorzugt mehr als 6,0 dtex, inbesondere 6,3 bis 10 dtex,
- die Fasern sind Modalfasern, wobei
- der Nassmodul der Fasern folgender Formel genügt:
Nassmodul (cN) ≥ 0,5*√T, wobei T der Titer der Faser in dtex ist,
- die Bruchfestigkeit der Fasern im konditionierten Zustand folgender Formel genügt:
Bruchfestigkeit (cN) ≥ 1,3*√T + 2*T, wobei T der Titer der Faser in dtex ist.

12. Füllmaterial gemäß einem der Ansprüche 7 bis 11, insbesondere in Form eines Vlieses, **dadurch gekennzeichnet, dass** es im Wesentlichen aus der multilobalen Cellulosestapelfaser besteht.

13. Füllmaterial gemäß einem der Ansprüche 7 bis 11, **dadurch gekennzeichnet, dass** es zusätzlich eine weitere Faser und/oder eine weitere Füllkomponente enthält.

14. Füllmaterial gemäß Anspruch 13, **dadurch gekennzeichnet, dass** die weitere Faser und/oder Komponente aus der Gruppe bestehend aus synthetischen Fasern, insbesondere Polyesterfasern, Polyacrylfasern, Polyamidfasern, Polylactatfasern; natürlichen Fasern,
insbesondere Baumwolle, Kapok, Bastfasern, Sisal, Seide; Man-made-cellulosischen Fasern, insbesondere Viskosefasern, Modalfasern, Lyocellfasern; und/oder tierischen Haaren, insbesondere Schafwolle, Roßhaar, Kaninchenwolle, Kamelhaar und Kaschmir ausgewählt ist.

15. Füllmaterial gemäß Anspruch 13 oder 14, **dadurch gekennzeichnet, dass** die weitere Füllkomponente aus der Gruppe bestehend aus Daunen und Federn ausgewählt ist.

16. Füllmaterial gemäß einem der Ansprüche 7 bis 15 in Form eines Faserbällchens.

17. Füllmaterial gemäß einem der Ansprüche 7 bis 15, **dadurch gekennzeichnet, dass** es aus mehreren vliesförmigen Schichten besteht, wobei zumindest eine der Schichten die multilobale Cellulosestapelfaser enthält.

## Revendications

1. Utilisation d'une pluralité de fibres cellulosiques discontinues multilobées, dans laquelle la coupe transversale des fibres est sensiblement la même tout le long de la pluralité de fibres, en tant que fibres de remplissage.

2. Utilisation selon la revendication 1 en tant que fibre de remplissage pour couettes, coussins, oreillers, matelas, molletons d'ameublement et habillement.

3. Utilisation selon la revendication 1 ou 2, **caractérisée en ce que** le titre de la fibre cellulosique discontinue multilobée est de 1,0 à 30 dtex, de préférence supérieur à 3,0 dtex, en particulier supérieur à 5,0 dtex, de préférence de 5,6 à 10 dtex, de manière particulièrement préférée supérieur à 6,0 dtex, en particulier de 6,3 à 10 dtex.

4. Utilisation selon l'une quelconque des revendications 1 à 3, **caractérisée en ce que** la fibre cellulosique discontinue est modifiée par un composé choisi dans le groupe constitué par le chitosane et les polymères de chitosonium.

5. Utilisation selon l'une quelconque des revendications 1 à 4, **caractérisée en ce que** la fibre cellulosique discontinue est modifiée par un agent ignifuge, de préférence une argile modifiée ou non modifiée.

6. Utilisation selon l'une quelconque des revendications 1 à 5, **caractérisée en ce qu'**une fibre cellulosique discontinue est utilisée, qui présente les propriétés suivantes :
- la coupe transversale des fibres a trois lobes ou plus, respectivement
- la coupe transversale des fibres est sensiblement la même tout le long de la pluralité des fibres
- le titre des fibres est de 1,0 à 30 dtex, de préférence supérieur à 3,0 dtex, en particulier supérieur à 5,0 dtex, de préférence de 5,6 à 10 dtex, de manière particulièrement préférée supérieur à 6,0 dtex, en particulier de 6,3 à 10 dtex
- les fibres sont des fibres de Modal, dans lesquelles
- le module humide des fibres satisfait la formule suivante :
Module humide (cN) ≥ 0,5*√T dans laquelle T est le titre de la fibre en dtex
- la résistance à la rupture des fibres à l'état conditionné satisfait la formule suivante :
Résistance à la rupture (cN) ≥ 1,3*√T + 2*T dans laquelle T est le titre de la fibre en dtex.

7. Matériau de remplissage pour couettes, coussins, oreillers, matelas, molletons d'ameublement, habillement, contenant des fibres cellulosiques discontinues multilobées dont la coupe transversale est sensiblement la même tout le long de la pluralité de fibres.

8. Matériau de remplissage selon la revendication 7, **caractérisé en ce que** le titre de la fibre cellulosique discontinue multilobée est de 1,0 dtex à 30 dtex, de préférence supérieur à 3,0 dtex, en particulier supérieur à 5,0 dtex, de préférence de 5,6 à 10 dtex, de manière particulièrement préférée supérieur à 6,0 dtex, en particulier de 6,3 à 10 dtex.

9. Matériau de remplissage selon la revendication 7 ou 8, **caractérisé en ce que** la fibre cellulosique discontinue multilobée est modifiée par un composé choisi dans le groupe constitué par le chitosane et les polymères de chitosonium.

10. Matériau de remplissage selon l'une quelconque des revendications 7 à 9, **caractérisé en ce que** la fibre cellulosique discontinue multilobée est modifiée par un agent ignifuge, de préférence une argile modifiée ou non modifiée.

11. Matériau de remplissage selon l'une quelconque des revendications 7 à 10, **caractérisé en ce qu'**une fibre cellulosique discontinue est utilisée, qui présente les propriétés suivantes :
- la coupe transversale des fibres a trois lobes ou plus, respectivement
- la coupe transversale des fibres est sensiblement la même tout le long de la pluralité des fibres
- le titre des fibres est de 1,0 à 30 dtex, de préférence supérieur à 3,0 dtex, en particulier supérieur à 5,0 dtex, de préférence de 5,6 à 10 dtex, de manière particulièrement préférée supérieur à 6,0 dtex, en particulier de 6,3 à 10 dtex
- les fibres sont des fibres de Modal, dans lesquelles
- le module humide des fibres satisfait la formule suivante :
Module humide (cN) ≥ 0,5*√T dans laquelle T est le titre de la fibre en dtex
- la résistance à la rupture des fibres à l'état conditionné satisfait la formule suivante :
Résistance à la rupture (cN) ≥ 1,3*√T + 2*T dans laquelle T est le titre de la fibre en dtex.

12. Matériau de remplissage selon l'une quelconque des revendications 7 à 11, en particulier sous la forme d'un molleton, **caractérisé en ce qu'**il est essentiellement constitué de la fibre cellulosique discontinue multilobée.

13. Matériau de remplissage selon l'une quelconque des revendications 7 à 11, **caractérisé en ce qu'**il contient en outre une autre fibre et/ou un autre constituant de remplissage.

14. Matériau de remplissage selon la revendication 13, **caractérisé en ce que** l'autre fibre et/ou constituant est choisi dans le groupe constitué par les fibres synthétiques, en particulier les fibres de polyester, les fibres polyacryliques, les fibres de polyamide, les fibres de polylactate ; les fibres naturelles, en particulier le coton, le kapok, les fibres libériennes, le sisal, la soie ; les fibres cellulosiques artificielles, en particulier les fibres de viscose, les fibres de Modal, les fibres de Lyocell ; et/ou les poils d'animaux, en particulier la laine de mouton, le crin de cheval, la laine de lapin, les poils de chameau et le cachemire.

15. Matériau de remplissage selon la revendication 13 ou 14, **caractérisé en ce que** l'autre constituant de remplissage est choisi dans le groupe constitué par le duvet et les plumes.

16. Matériau de remplissage selon l'une quelconque des revendications 7 à 15 sous la forme d'une boulette de fibres.

17. Matériau de remplissage selon l'une quelconque des revendications 7 à 15, **caractérisé en ce qu'**il est composé de différentes couches de molleton, dans lequel au moins l'une desdites couches contient la fibre cellulosique discontinue multilobée.
